# EUROPÄISCHE PATENTSCHRIFT

(11) **EP 1 761 417 B1**
(45) Veröffentlichungstag und Bekanntmachung des Hinweises auf die Patenterteilung: **26.11.2008**
(21) Anmeldenummer: 05752637.8
(22) Anmeldetag: 17.06.2005
(51) Int. Cl.: B60R 22/195

(54) **SICHERHEITSGURT-STRAFFEINRICHTUNG MIT EINEM EINE ENGSTELLE AUFWEISENDEN ROHR**
SAFETY BELT TENSIONING DEVICE COMPRISING A TUBE WITH A BOTTLENECK
TENDEUR DE CEINTURE DE SECURITE COMPORTANT UN TUBE PRESENTANT UN RETRECISSEMENT

(30) Priorität: 01.07.2004 DE 102004032063
(43) Veröffentlichungstag der Anmeldung: 14.03.2007
(73) Patentinhaber: AUTOLIV DEVELOPMENT AB, 447 83 Vargarda (SE)
(72) Erfinder: SINGER, Klaus-Peter, 22399 Hamburg (DE)
(74) Vertreter: Müller, Karl-Ernst
(86) Internationale Anmeldenummer: PCT/EP2005/006506
(87) Internationale Veröffentlichungsnummer: WO 2006/002776

(56) Entgegenhaltungen:
- EP-A- 1 283 138
- EP-A- 1 344 697
- DE-A1- 4 227 780
- US-A- 4 237 690
- PATENT ABSTRACTS OF JAPAN Bd. 2003, Nr. 03, 5. Mai 2003 (2003-05-05) -& JP 2002 331911 A (MATSUMOTO JUKOGYO KK; NSK AUTOLIV CO LTD), 19. November 2002 (2002-11-19)

## Beschreibung

Die Erfindung betrifft eine Straffeinrichtung für einen Sicherheitsgurt mit einem in einem Rohr geführten und im Auslösefall mit von einem in einem Rohrabschnitt angeordneten Gasgenerator erzeugten Gas beaufschlagten Kolben, an den ein durch eine Seilöffnung in das Rohr eingeführter Seilabschnitt angeschlossen ist.

Eine Straffeinrichtung mit den vorgenannten Merkmalen ist in der EP 1 283 138 A1 beschrieben; die bekannte Straffeinrichtung besteht aus einem zur besseren Unterbringung und Montage in den häufig beengten Platzverhältnissen eines Kraftfahrzeuges passend gebogenen Rohr zur Aufnahme des für den Straffvorganges erforderlichen Antriebes, welches einen gradlinigen, einen Kolben aufnehmenden und somit einen Kolbenweg bildenden Abschnitt und einen dazu abgebogenen, den Gasgenerator in sich aufnehmenden Abschnitt aufweist. Bei dem in der EP 1 283 138 A1 dargestellten Ausführungsbeispiel ist die Straffeinrichtung für ein Gurtschloss vorgesehen, wobei das Gurtschloss an einen Seilabschnitt angeschlossen bzw. von diesem getragen ist. Der Seilabschnitt ist in einer zusätzlich vorgesehenen, außerhalb des gebogenen Rohres angeordneten Seilumlenkung umgelenkt, durch eine in der Wandung des gebogenen Rohres ausgebildete Seilöffnung in das Rohr hineingeführt und hier an den Kolben angeschlossen. Im Auslösefall erzeugt der Gasgenerator ein Treibgas, welches über die Biegestelle des Rohres strömt und den Kolben längs des Kolbenweges antreibt, so dass der an den Kolben angeschlossene Seilabschnitt in das gebogene Rohr eingezogen wird. Hierdurch wird das Gurtschloss in Richtung der Seilumlenkung gezogen, wodurch der an das Gurtschloss angeschlossene Sicherheitsgurt gestrafft wird.

Mit der bekannten Straffvorrichtung ist der Nachteil verbunden, dass der Druck des vom Gasgenerator erzeugten Gases durch das einen gleich bleibenden Querschnitt aufweisende Rohr unmittelbar auf den Kolben geleitet wird. Dies bedeutet, dass die nach dem Zünden des Gasgenerators vor der Bewegung des Kolbens entstehende Druckspitze eine ausreichende Stärke des Antriebseils und stabile Verbindung des Seils mit dem Kolben sowie eine entsprechend gute Abdichtung des Seileintritts in das Rohr erforderlich macht, was einen entsprechenden Aufwand bei der Auslegung der bekannten Straffvorrichtung bedingt.

Der Erfindung liegt daher die Aufgabe zugrunde, eine Straffeinrichtung mit den gattungsgemäßen Merkmalen so auszugestalten, dass die Beanspruchung von Antriebsseil sowie weiterer Bauteile bei einfacher Herstellung der Straffvorrichtung reduziert ist.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Die Erfindung sieht in ihrem Grundgedanken vor, dass der den Gasgenerator aufnehmende Aufnahmeabschnitt des Rohres von dem den Kolben aufnehmenden Kolbenwegabschnitt des Rohres durch eine in das Rohr eingebrachte Querschnittsverengung mit einem definierten Überströmweg abgesetzt ist.

Mit der Erfindung ist der Vorteil verbunden, dass aufgrund der Trennung von Aufnahmeabschnitt für den Gasgenerator und Kolbenwegabschnitt sich in dem Aufnahmeabschnitt nach Zündung des Gasgenerators ein genügend großer Druck aufbauen kann, um auch bei niedrigen Temperaturen eine saubere und vollständige Verbrennung des gaserzeugenden Materials für die Gaserzeugung sicher zu stellen. Aufgrund des zwischen den vorgenannten Abschnitten des Rohres eingebrachten Überströmquerschnitts wirkt nach Zündung des Gasgenerators keine Druckspitze in den Kolbenwegabschnitt ein, so dass dünnere Antriebsseile eingesetzt werden können. Entsprechend sind im Bereich der Seilabdichtung auftretende Druckverluste geringer. Ein weiterer Vorteil besteht darin, dass der in dem Kolbenwegabschnitt herrschende, auf den Kolben einwirkende Druck über einen längeren Zeitraum in gleichmäßiger Weise aufrechterhalten wird, da aus dem Aufnahmeabschnitt entsprechend ein Gasstrom geregelt und kontinuierlich nachgeschoben wird. Aufgrund der Auslegung der Querschnittsverengung im Verhältnis zu dem eingesetzten Rohr können in einfacher Weise Anpassungen der Auslegung der Straffvorrichtung an deren Einsatzbedingungen in einem Sicherheitsgurtsystem vorgenommen werden.

Nach einem Ausführungsbeispiel der Erfindung ist vorgesehen, dass die Querschnittsverengung in das Rohr mittels Verformung des Rohres eingebracht ist. Hiermit ist der Vorteil einer einfachen Herstellung der Straffvorrichtung ohne zusätzliche, in das Rohr einzubringende Einbauten verbunden. Hierbei kann nach alternativen Ausführungsformen der Erfindung die Querschnittsverengung in das Rohr mittels Rollen oder Biegen des Rohres angebracht werden.

Soweit in einer besonderen Ausführungsform der Erfindung mit einem Biegen des Rohres vorgesehen ist, dass das Rohr an einer Biegestelle unter Einsatz passender und die Breite des Rohres bei dem Biegevorgang begrenzender Biegewerkzeuge derart gebogen ist, dass in der den größeren Biegeradius aufweisenden Außenwand des gebogenen Rohres eine Hohlkehle eingeprägt ist und der Seilabschnitt über die Biegestelle des Rohres umgelenkt ist, ergibt sich daraus der besondere Vorteil, dass aufgrund der in besonderer Weise herbeigeführten Rohrbiegung bzw. der Ausbildung der Biegestelle des Rohres das gebogene Rohr selbst die Seilumlenkung bildet, so dass eine gesonderte Seilumlenkung als Bauteil wie auch die Montage eines derartigen gesonderten Bauteils gegenüber dem Stand der Technik eingespart sind. Die Straffeinrichtung ist mit weniger Bauteilen und dadurch insgesamt kostengünstiger herzustellen und schließlich ist die erfindungsgemäße Straffeinrichtung kompakt ausgeführt und daher platzsparend in einem Kraftfahrzeug unterzubringen.

Hinsichtlich der Ausbildung der Biegestelle ist nach einem Ausführungsbeispiel der Erfindung vorgesehen, dass die gebogene Innenwand des Rohres an der engsten Biegestelle mit ihrer Innenseite an ihrem zentralen Bereich in Anlage an der Innenseite der in der gebogenen Außenwand eingeprägten Hohlkehle gebracht ist und in den zu beiden Seiten der Hohlkehle zwischen Außenwand und Innenwand ausgebildeten Ohren Gasführungskanäle zur Durchleitung des Gases von dem den Gasgenerator aufnehmenden Abschnitt des Rohres in den den Kolbenweg bildenden Abschnitt des Rohres ausgebildet sind. Aufgrund der so ausgeführten Biegung ergeben sich definierte Querschnitte für die Gasführungskanäle, was für die sichere Funktion der Straffeinrichtung von Vorteil ist.

Nach einem Ausführungsbeispiel der Erfindung ist vorgesehen, dass der Innenwinkel zwischen dem Gasgeneratorabschnitt und dem Kolbenwegabschnitt des Rohres kleiner als die Umlenkung des Seilabschnitts ist, wobei insbesondere der Innenwinkel kleiner als 90 Grad sein kann.

Nach einem Ausführungsbeispiel der Erfindung ist vorgesehen, dass die Seilöffnung an dem dem Gasgenerator zugewandten Bereich der Rohrbiegung angeordnet ist.

Weiterhin kann vorgesehen sein, dass in dem von der gebogenen Innenwand des Rohres eingeschlossenen Innenwinkel des gebogenen Rohres ein Befestigungsmittel für ein das Rohr an einem fahrzeugfesten Teil festliegendes Halteteil anzuordnen ist.

Nach einem Ausführungsbeispiel der Erfindung ist vorgesehen, dass das Halteteil das gebogene Rohr in dessen Biegebereich außen übergreift und an der Außenwand des gebogenen Rohres eine Führung für den in der Hohlkehle verlaufenden Seilabschnitt ausbildet.

Nach einem Ausführungsbeispiel der Erfindung kann vorgesehen sein, dass das Halteteil mit einem dem Verlauf der den Innenwinkel einschließenden Innenwand des gebogenen Rohres angepassten Vorsprung formschlüssig in den Innenwinkel des gebogenen Rohres einspringt und die Innenwand des gebogenen Rohres stützt. Hierdurch wird die Befestigung des gebogenen Rohres und dessen Auslegung insgesamt verbessert.

In der Zeichnung sind Ausführungsbeispiele der Erfindung wiedergegeben, welche nachstehend beschrieben sind. Es zeigen:
- Fig. 1: das gebogene Rohr einer Straffvorrichtung in einer perspektivischen Darstellung,
- Fig. 2: den Gegenstand der Figur 1 in einer anderen Perspektivansicht,
- Fig. 3: die Straffvorrichtung als Schlossstraffer in einer Gesamtansicht,
- Fig. 4: die Biegestellung in einer schematischen Seitenansicht,
- Fig. 5: die Biegestelle in einer teilweisen Schnittansicht,
- Fig. 6: die Biegestelle in einer vergrößerten Schnittdarstellung,
- Fig. 7: eine als Endbeschlagstraffer ausgebildete Straffeinrichtung in einer Gesamtdarstellung.
- Fig. 8: das gebogene Rohr einer Straffvorrichtung in einer Darstellung gemäß Figur 1 in einer anderen Ausführungsform,
- Fig. 9: die Ausbildung der Querschnittsverengung bei dem Rohr gemäß Figur 8 in einer vergrößerten Schnittdarstellung.

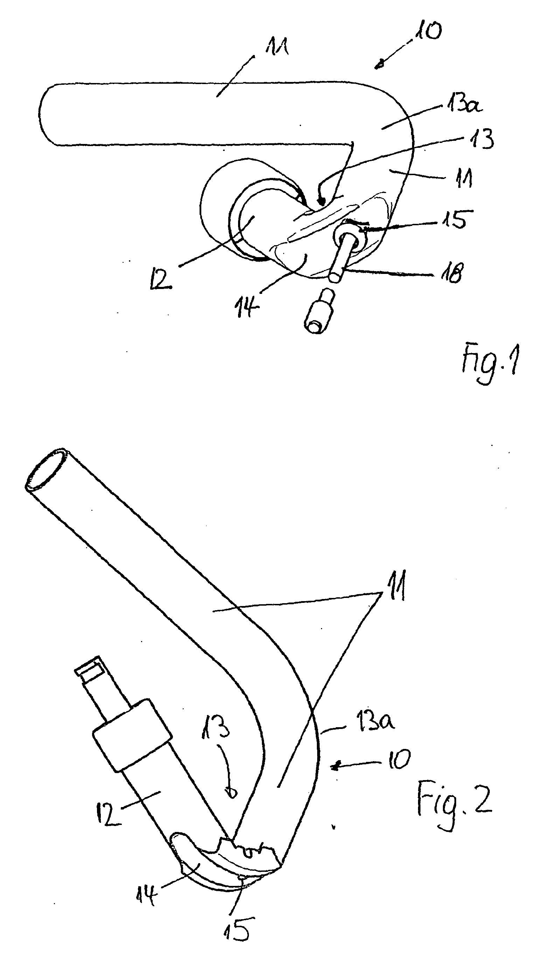

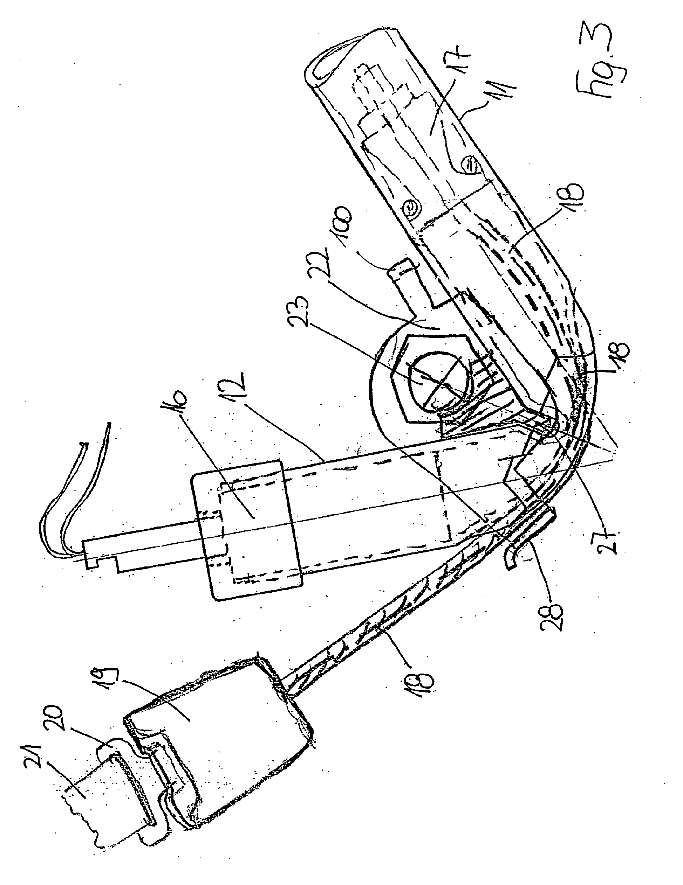

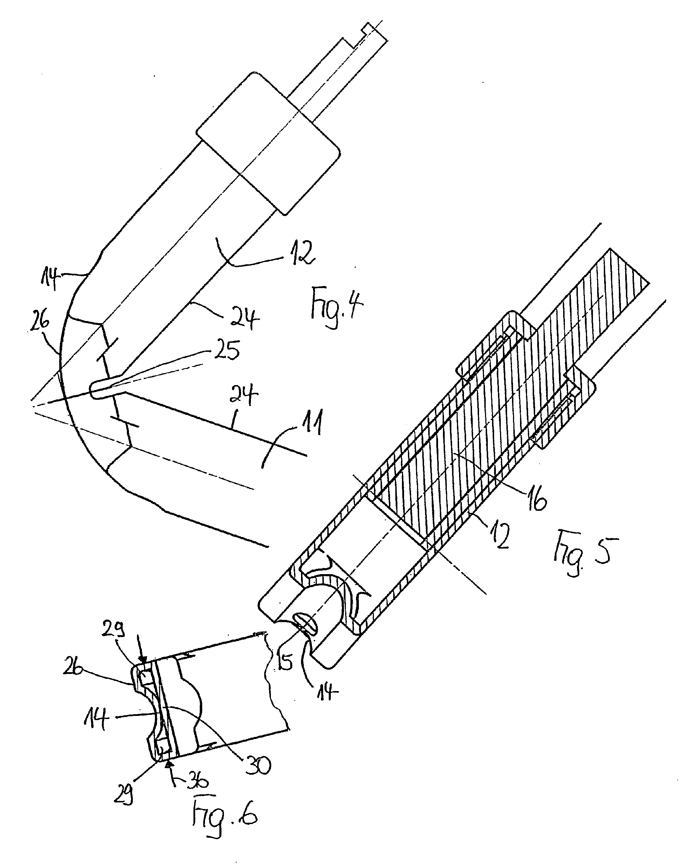

Bezug nehmend zunächst auf Figuren 1 und 2 ist ein gebogenes Rohr 10 als Bestandteil des Antriebes für die in Figur 3 in einer Gesamtdarstellung dargestellte Straffeinrichtung erkennbar, wobei das Rohr 10 in dem dargestellten Ausführungsbeispiel einen einen Kolbenweg ausbildenden Kolbenwegabschnitt 11 und einen einen Gasgenerator aufnehmenden Aufnahmeabschnitt 12 aufweist. An der den Aufnahmeabschnitt 12 und den Kolbenwegabschnitt 11 voneinander trennenden Biegestelle 13 ist eine im einzelnen noch zu beschreibende Querschnittsverengung mit einem definierten Überströmweg für das vom Gasgenerator erzeugte und in den Kolbenwegabschnitt 11 einzuleitende Gas in Form von Gasführungskanälen 29 (Figur 6) ausgebildet. An der Biegestelle 13 ist durch den Einsatz entsprechender Biegewerkzeuge zur Herstellung der Rohrbiegung in die zugehörige Außenwand eine Hohlkehle 14 eingeprägt, und es ist an in dem Gasgeneratorabschnitt 12 zugewandten Bereich der Biegestelle 13 eine Seilöffnung 15 zum Durchtritt des noch zu beschreibenden Seilabschnitts ausgebildet. Bei dem dargestellten Ausführungsbeispiel ist der an die Biegestelle 13 des Rohres 10 anschließende Rohrabschnitt nochmals durch eine weitere Biegestelle 13a abgebogen, was für die Bewegung des Kolbens in dem zugeordneten Kolbenwegabschnitt 11 nicht hinderlich ist. Wichtig für die Verwirklichung der Erfindung ist jedoch die Ausbildung der Biegestelle 13, und es soll mit den Figuren 1 und 2 verdeutlicht werden, dass im Anschluss an die Biegestelle 13 des Rohres 10 weitere Variationen der Auslegung des Rohres 10 mit dem Kolbenwegabschnitt 11 möglich sind.

In Figur 3 ist nun die Biegestelle 13 mit den daran anschließenden Rohrabschnitten 11, 12 im einzelnen dargestellt. Es ist erkennbar, dass in den Aufnahmeabschnitt 12 ein Gasgenerator 16 einschließlich entsprechender Zünd- und Zuleitungsvorrichtungen eingesetzt und hierin festgelegt ist.

In dem Kolbenwegabschnitt 11 ist ein Kolben 17 eingesetzt, an dem ein Seilabschnitt 18 befestigt ist. Der Seilabschnitt 18 verläuft in Richtung auf die Biegestelle 13 des Rohres 10, tritt hier durch die Seilöffnung 15 aus dem Rohr 10 aus und liegt dann an der in der Außenwand 26 des gebogenen Rohres durch den Einsatz eines entsprechenden Biegewerkzeuges erzeugten Hohlkehle 14 als Seilführung. An dem freien Ende des Seilabschnitts 18 ist ein Gurtschloss 19 befestigt, in welches eine Gurtzunge 20 eingehakt ist, an die ein Sicherheitsgurt 21 angeschlossen ist.

In den von Innenwänden 24 der beiden Rohrabschnitte 11, 12 des gebogenen Rohres 10 eingeschlossenen Bereich ist ein Befestigungsbeschlag als Halteteil 22 eingesetzt, der mittels einer Schraube 23 an einem fahrzeugfesten Teil befestigbar ist. Der Befestigungsbeschlag 22 ist dabei in seiner Form derart ausgebildet, dass er die ihn einschließenden Innenwände 24 der Rohrabschnitte 11, 12 formschlüssig abstützt und mit einem Vorsprung 27 in den durch den Biegevorgang mittels eines entsprechend angeordneten Biegewerkzeuges ausgebildeten Innenwinkel 25 eingreift und dadurch das gebogene Rohr 10 sicher an dem Kraftfahrzeug fixiert. Der Befestigungsbeschlag 22 übergreift weiterhin das gebogene Rohr 10 auf dessen Außenseite und bildet im Bereich der Außenwand des gebogenen Rohres zusätzlich eine Führung 28 für den in der Hohlkehle 14 verlaufenden Seilabschnitt 18 aus. Aufgrund der Anordnung des Befestigungsbeschlags 22 in dem zwischen den Innenwänden 24 der beiden Rohrabschnitte 11, 12 eingeschlossenen Winkel wird die erforderliche Baulänge der Straffeinrichtung erheblich verkürzt und der gesamte konstruktive Aufbau wesentlich vereinfacht. Ferner können der Vorsprung 27, eine an dem Befestigungsbeschlag 22 zusätzlich vorgesehene Nase 100 oder andere entsprechend vorgesehene Absätze als Antirotationssicherung gegenüber dem Kraftfahrzeug zur Lagefixierung der Straffeinrichtung genutzt werden.

Wie sich aus den Figuren 4 - 6 ergibt, ist die Rohrbiegung durch den Ansatz entsprechender Biegewerkzeuge derart vorgenommen, dass an der engsten Biegestelle die Innenseite der zugehörigen Innenwand 24 des gebogenen Rohres 10 mit ihrem zentralen Bereich 30 in Anlage an der Innenseite der in der gebogenen Außenwand 26 eingeprägten Hohlkehle 14 gebracht ist, so dass sich zu beiden Seiten der eingeprägten Hohlkehle 14 Ohren ergeben, die Gasführungskanäle 29 zur Durchleitung des Gases von dem Aufnahmeabschnitt 12 zum Kolbenwegabschnitt 11 des Rohres 10 ausbilden. Um eine derartige Kontur des Rohrinneren an der Biegestelle zu erreichen, muss beim Biegen des Rohres mittels der am Innenwinkel 25 bzw. an der Außenseite angesetzten Biegewerkzeuge die Breite des Rohres durch zusätzliche Werkzeuge begrenzt werden, wie dies durch die Pfeile 36 in Figur 6 angedeutet ist.

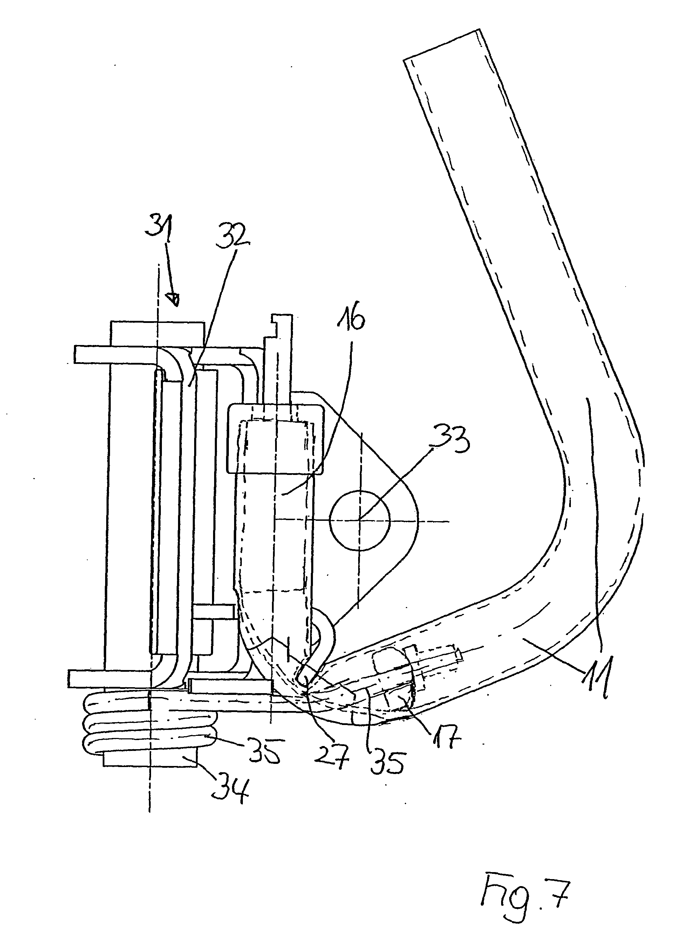

In Figur 7 ist schließlich noch eine Ausführungsform der Erfindung dargestellt, die deutlich macht, dass die erfindungsgemäße Ausgestaltung der Antriebsvorrichtung für die Straffeinrichtung mit dem gebogenen Rohr 10 auch für den Anschluss an einen Endbeschlag vorgesehen bzw. eingerichtet sein kann. Bei einem derartigen Endbeschlag 31 ist das Ende des nicht weiter dargestellten Gurtbandes auf einer in einem Gehäuse 32 gelagerten Welle 34 befestigt, die bei normalem Gebrauch des Sicherheitsgurtes nicht gedreht wird. Lediglich beim Erfassen eines Unfalles soll der an den Endbeschlag 31 angeschlossene Abschnitt des Sicherheitsgurtes gestrafft werden, und hierzu soll die in dem Gehäuse 32 drehbar gelagerte Welle 34 in Drehung versetzt werden. Dies geschieht gemäß dem in Figur 7 dargestellten Ausführungsbeispiel dadurch, dass auf einem Wellenfortsatz ein Seilabschnitt 35 aufgewickelt ist, dessen Ende in der bereits zu Figur 3 beschriebenen Weise in das gebogene Rohr 10 hineingeführt und an dem dort angeordneten Kolben 17 angeschlossen ist. Bei Auslösung des Gasgenerators wird der Kolben angetrieben und wickelt den Seilabschnitt 35 von der Welle 34 ab, so dass die Welle in Straffrichtung für den Sicherheitsgurt gedreht wird.

Wie sich aus Figur 7 ergibt, ist das Gehäuse 32 über eine Befestigungsbohrung 33 an dem Kraftfahrzeug zu befestigen, wobei das Gehäuse 32 integral den in den Innenwinkel 25 des gebogenen Rohres 10 hineinragenden und dadurch das gebogene Rohr an dem Gehäuse 32 des Endbeschlages 31 festlegenden Vorsprung 27 aufweist.

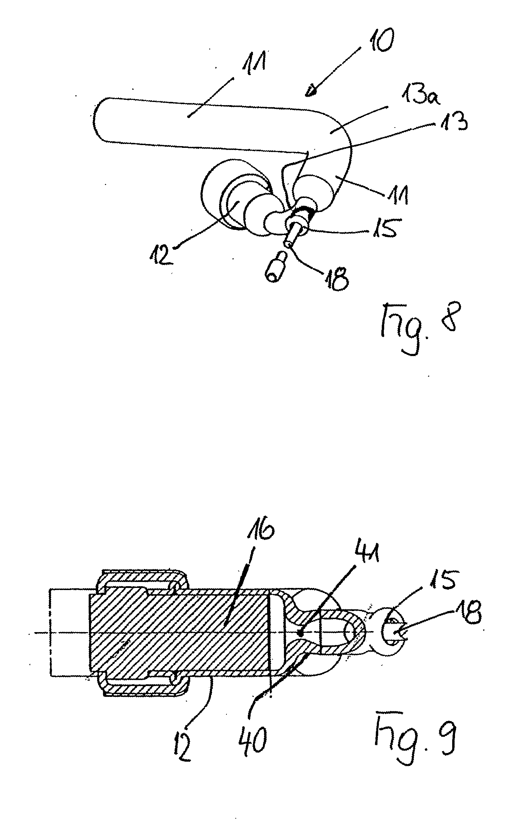

Bei dem in Figuren 8 und 9 dargestellten Ausführungsbeispiel ist die entsprechende Querschnittverengung im Bereich der Biegestelle 13 durch Rollen oder Walzen hergestellt, wobei sich eine Einschnürung 40 mit einem in deren Inneren verbleibenden Überströmweg 41 ergibt.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Straffeinrichtung für einen Sicherheitsgurt mit einem in einem Rohr (10) geführten und im Auslösefall mit von einem in einem Rohrabschnitt (12) angeordneten Gasgenerator (16) erzeugten Gas beaufschlagten Kolben (17), an den ein durch eine Seilöffnung (15) in das Rohr (10) eingeführter Seilabschnitt (18, 35) angeschlossen ist, **dadurch gekennzeichnet, dass** der den Gasgenerator (16) aufnehmende Aufnahmeabschnitt (12) des Rohres (10) von dem den Kolben (17) aufnehmenden Kolbenwegabschnitt (11) des Rohres (10) durch eine in das Rohr (10) eingebrachte Querschnittsverengung mit einem definierten Überströmweg (29, 41) abgesetzt ist.

2. Straffeinrichtung nach Anspruch 1, **dadurch gekennzeichnet, dass** die Querschnittsverengung in das Rohr (10) mittels Verformung des Rohres (10) eingebracht ist.

3. Straffeinrichtung nach Anspruch 2, **dadurch gekennzeichnet, dass** die Querschnittsverengung in das Rohr (10) durch Verformung mittels Rollen des Rohres (10) eingebracht ist.

4. Straffeinrichtung nach Anspruch 2, **dadurch gekennzeichnet, dass** die Querschnittsverengung in das Rohr (10) durch Biegen des Rohres eingebracht ist.

5. Straffeinrichtung nach Anspruch 4, **dadurch gekennzeichnet, dass** das Rohr (10) an einer Biegestelle (13) unter Einsatz passender und die Breite des Rohres (10) bei dem Biegevorgang begrenzender Biegewerkzeuge derart gebogen ist, dass in der den größeren Biegeradius aufweisenden Außenwand (26) des gebogenen Rohres (10) eine Hohlkehle (14) eingeprägt ist und der Seilabschnitt (18, 35) über die Biegestelle (13) des Rohres (10) umgelenkt ist.

6. Straffeinrichtung nach Anspruch 5, **dadurch gekennzeichnet, dass** die gebogene Innenwand (24) des Rohres (10) an der engsten Biegestelle mit ihrer Innenseite an ihrem zentralen Bereich (30) in Anlage an der Innenseite der in der gebogenen Außenwand (26) eingeprägten Hohlkehle (14) gebracht ist und in den zu beiden Seiten der Hohlkehle (14) zwischen Außenwand (26) und Innenwand (24) ausgebildeten Ohren Gasführungskanäle (29) zur Durchleitung des Gases von dem den Gasgenerator (16) aufnehmenden Abschnitt (12) des Rohres (10) in den den Kolbenweg bildenden Abschnitt (11) des Rohres (10) ausgebildet sind.

7. Straffeinrichtung nach Anspruch 5 oder 6, **dadurch gekennzeichnet, dass** der Innenwinkel (25) zwischen dem Gasgeneratorabschnitt (12) und dem Kolbenwegabschnitt (11) des Rohres (10) kleiner als die Umlenkung des Seilabschnitts (18, 35) ist.

8. Straffeinrichtung nach Anspruch 5 oder 6, **dadurch gekennzeichnet, dass** der Innenwinkel (25) zwischen dem Gasgeneratorabschnitt (12) und dem Kolbenwegabschnitt (11) des Rohres (10) kleiner als 90 Grad ist.

9. Straffeinrichtung nach einem der Ansprüche 5 bis 8, **dadurch gekennzeichnet, dass** die Seilöffnung (15) an dem dem Gasgenerator (16) zugewandten Bereich der Rohrbiegung angeordnet ist.

10. Straffeinrichtung nach einem der Ansprüche 5 bis 9, **dadurch gekennzeichnet, dass** in dem von der gebogenen Innenwand (24) des Rohres (10) eingeschlossenen Innenwinkel (25) des gebogenen Rohres (10) ein Befestigungsmittel (23) für ein das Rohr (10) an einem fahrzeugfesten Teil festliegendes Halteteil (22) anzuordnen ist.

11. Straffeinrichtung nach Anspruch 10, **dadurch gekennzeichnet, dass** das Halteteil (22) das gebogene Rohr (10) in dessen Biegebereich (13) außen übergreift und an der Außenwand (26) des gebogenen Rohres (10) eine Führung (28) für den in der Hohlkehle (14) verlaufenden Seilabschnitt (18, 35) ausbildet.

12. Straffeinrichtung nach einem der Ansprüche 5 bis 9, **dadurch gekennzeichnet, dass** das Halteteil (22) mit einem dem Verlauf der den Innenwinkel (25) einschließenden Innenwand (24) des gebogenen Rohres (10) angepassten Vorsprung (27) formschlüssig in den Innenwinkel (25) des gebogenen Rohres (10) einspringt und die Innenwand (24) des gebogenen Rohres stützt.

## Claims

1. Tensioning device for a seat belt with a piston (17) which is guided in a tube (10) and which in case of triggering is influenced by gas generated by a gas generator (16) located in one section (12) of the tube, to which a cable section (18, 35) led into the tube (10) by a cable opening (15) is attached, **characterised in that** the accommodation section (12) of the tube (10) which accommodates the gas generator (16) is offset from the piston path section (11) of the tube (10) which accommodates the piston (17) by a narrowed cross-section created in the tube (10) with a defined overflow path (29, 41).

2. Tensioning device according to Claim 1, **characterised in that** the narrowed cross-section is created in the tube (10) by means of deformation of the tube (10).

3. Tensioning device according to Claim 2, **characterised in that** the narrowed cross-section is created in the tube (10) by deformation by rolling of the tube (10).

4. Tensioning device according to Claim 2, **characterised in that** the narrowed cross-section is created in the tube (10) by bending of the tube.

5. Tensioning device according to Claim 4 **characterised in that** the tube (10) is bent in such a way at a bending location (13) with the use of suitable tools which limit the width of the tube (10) such that in the outer wall (26) of the bent tube (10) exhibiting the larger bending radius, a hollow throat (14) is impressed in and the cable section (18, 35) is deflected via the bending location (13) of the tube (10).

6. Tensioning device according to Claim 5, **characterised in that** the bent inner wall (24) of the tube (10) is brought into contact with its inner side at its central area (30) at the narrowest bending location with the inner side of the hollow throat (14) which is impressed into the bent outer wall (26), and in the ears formed on both sides of hollow throat (14) between outer wall (26) and inner wall (24), gas guide channels (29) are formed for leading the gas from the section (12) of the tube (10) which accommodates the gas generator (16) into the section (11) of tube (10) which forms the piston path.

7. Tensioning device according to Claim 5 or 6, **characterised in that** the internal angle (25) between the gas generator section (12) and the piston path section (11) of the tube (10) is smaller than the deflection of the cable section (18, 35).

8. Tensioning device according to Claim 5 or 6, **characterised in that** the internal angle (25) between the gas generator section (12) and the piston path section (11) of the tube (10) is smaller than 90 degrees.

9. Tensioning device according to any of claims 5 to 8, **characterised in that** the cable opening (15) is arranged on the area of the tube bend facing the gas generator (16).

10. Tensioning device according to any of claims 5 to 9, **characterised in that** in the internal angle (25) of the bent tube (10) enclosed by the bent inner wall (24) of tube (10), a fixing means (23) for a fixing part (22) which fixes the tube (10) to a fixed vehicle part is to be arranged.

11. Tensioning device according to Claim 10, **characterised in that** the fixing part (22) reaches over the bent tube (10) at the outside at its bending location (13) and that on the outer wall (26) of the bent tube (10) a guide (28) is formed on outer wall (26) of the bent tube (10) for the cable section (18,35) running in the hollow throat (14).

12. Tensioning device according to any of Claims 5 to 9, **characterised in that** the fixing part (22) enters into the internal angle (25) of the bent tube (10) with a projection (27) adapted to the course of the inner wall (24) of the bent tube (10) which includes the internal angle (25) so as to form an interference fit and supports the inner wall (24) of the bent tube.

## Revendications

1. Dispositif tendeur pour ceinture de sécurité, comprenant un piston (17) guidé dans un tuyau (10) et alimenté en cas de déclenchement par un gaz produit par un générateur de gaz (16) disposé dans un tronçon de tuyau (12), un tronçon de câble (18, 35) introduit à travers un oeillet de câble (15) dans le tuyau étant raccordé audit piston, **caractérisé en ce que** le tronçon de réception (12), recevant le générateur de gaz (16), du tuyau (10) est décalé par rapport au tronçon de course de piston (11), recevant le piston (17), du tuyau (10) par un rétrécissement de section transversale aménagé dans le tuyau (10) avec un trajet de trop-plein défini (29, 41).

2. Dispositif tendeur selon la revendication 1, **caractérisé en ce que** le rétrécissement de section transversale est aménagé dans le tuyau (10) au moyen d'une déformation du tuyau (10).

3. Dispositif tendeur selon la revendication 2, **caractérisé en ce que** le rétrécissement de section transversale est aménagé dans le tuyau (10) en déformant le tuyau (10) au moyen de rouleaux.

4. Dispositif tendeur selon la revendication 2, **caractérisé en ce que** le rétrécissement de section transversale est aménagé dans le tuyau (10) par cintrage du tuyau.

5. Dispositif tendeur selon la revendication 4, **caractérisé en ce que** le tuyau (10) est cintré au niveau d'un point de cintrage (13) par la mise en oeuvre d'outils de cintrage appropriés et limitant la largeur du tuyau (10) lors de l'opération de cintrage de telle sorte que dans la paroi extérieure (26), présentant le rayon de courbure supérieur, du tuyau cintré (10), une gorge creuse (14) est pratiquée et que le tronçon de câble (18, 35) est dévié par le point de cintrage (13) du tuyau (10).

6. Dispositif tendeur selon la revendication 5, **caractérisé en ce que** la paroi intérieure cintrée (24) du tuyau (10) est amenée au niveau du point de cintrage le plus serré, par son côté intérieur, dans sa zone centrale (30), en application contre le côté intérieur de la gorge creuse (14) pratiquée dans la paroi extérieure cintrée (26), et **en ce que** dans les oeillets réalisés des deux côtés de la gorge creuse (14) entre la paroi extérieure (26) et la paroi intérieure (24), des canaux de conduite de gaz (29) sont réalisés pour faire passer le gaz du tronçon (12) recevant le générateur de gaz (16) du tuyau (10) dans le tronçon (11) du tuyau (10) formant la course de piston.

7. Dispositif tendeur selon la revendication 5 ou 6, **caractérisé en ce que** l'angle intérieur (25) entre le tronçon de générateur de gaz (12) et le tronçon de course de piston (11) du tuyau (10) est inférieur à la déviation du tronçon de câble (18, 35).

8. Dispositif tendeur selon la revendication 5 ou 6, **caractérisé en ce que** l'angle intérieur (25) entre le tronçon de générateur de gaz (12) et le tronçon de course de piston (11) du tuyau (10) est inférieur à 90 degrés.

9. Dispositif tendeur selon l'une quelconque des revendications 5 à 8, **caractérisé en ce que** l'oeillet de câble (15) est disposé dans la zone du cintrage de tuyau tournée vers le générateur de gaz (16).

10. Dispositif tendeur selon l'une quelconque des revendications 5 à 9, **caractérisé en ce que** dans l'angle intérieur (25) du tuyau cintré (10), enfermé par la paroi intérieure (24) du tuyau (10), des moyens de fixation (23) sont à disposer pour une pièce de maintien (22) maintenant le tuyau (10) sur une pièce fixée au véhicule.

11. Dispositif tendeur selon la revendication 10, **caractérisé en ce que** la pièce de maintien (22) dépasse à l'extérieur du tuyau cintré (10) dans la zone de cintrage (13) de celui-ci et **en ce que** sur la paroi extérieure (26) du tuyau cintré (10), un guidage (28) est réalisé pour le tronçon de câble (18, 35) s'étendant dans la gorge creuse (14).

12. Dispositif tendeur selon l'une quelconque des revendications 5 à 9, **caractérisé en ce que** la pièce de maintien (22) s'enclenche par complémentarité de forme avec une saillie (27) adaptée au contour de la paroi intérieure (24), enfermant l'angle intérieur (25), du tuyau cintré dans l'angle intérieur (25) du tuyau cintré (10) et soutient la paroi intérieure (24) du tuyau cintré.
